(19) Europäisches Patentamt
European Patent Office
Office européen des brevets

(11) Publication number: **0 463 774 A2**

(12) **EUROPEAN PATENT APPLICATION**

(21) Application number: **91305362.5**

(51) Int. Cl.[5]: **C08F 4/42**

(22) Date of filing: **13.06.91**

(30) Priority: **25.06.90 GB 9014081**

(43) Date of publication of application:
**02.01.92 Bulletin 92/01**

(84) Designated Contracting States:
**AT BE CH DE DK ES FR GB GR IT LI LU NL SE**

(71) Applicant: **IMPERIAL CHEMICAL INDUSTRIES PLC**
**Imperial Chemical House, Millbank**
**London SW1P 3JF (GB)**

(72) Inventor: **Ballard, Dennis George Harold**
**The Old Coach House**
**Tarvin Road, Chester CH6 7DD (GB)**
Inventor: **Runciman, Peter James Inglis**
**484 Coniscliffe**
**Darlington, Co. Durham (GB)**
Inventor: **Pickering, Anthony**
**76 Beechview Road**
**Kingsley, Cheshire (GB)**

(74) Representative: **Draggett, Peter Thornton et al**
**Imperial Chemical Industries PLC P.O. Box 6**
**Bessemer Road**
**Welwyn Garden City Herts AL7 1HD (GB)**

(54) **Catalysts.**

(57) An extrusion polymerisation process is described in which the polymerisation of monomers, in particular acrylic monomers, is carried out in bulk in an extruder. The polymerisation reaction is catalysed by a catalyst composition comprising an initiator, e.g. an enol substituted organosilane, and a co-catalyst which is an anion source or a Lewis acid.

EP 0 463 774 A2

This invention relates to an extrusion polymerisation process, in particular a process for the extrusion polymerisation of acrylic monomers, using catalysts. (The terms polymerisation and polymer herein include a reference to homo- and co-polymerisation and to homo- and co-polymers respectively, and the term monomer herein includes a reference to oligomers)

The addition polymerisation of vinylic monomer species, in particular the addition polymerisation of acrylic monomers, using a free-radical catalyst is well known.

However, the polymerisation of several known monomers (especially acrylics) tends to suffer from an excessive and not easily controllable reaction exotherm, so that well-controlled bulk polymerisation of such monomers has hitherto been difficult to achieve, and most such polymerisations have therefore disadvantageously had to be carried out in solution.

The bulk polymerisation of acrylics (in particular the free-radical polymerisation of methyl methacrylate) under adiabatic conditions typically results in polymers with a broad molecular weight distribution and a significant fraction of very high molecular weight material.

Extrusion bulk polymerisation of monomers using the direct injection of monomer and free radical catalyst is a known plastics production process.

However, in the case of the bulk polymerisation of acrylics (especially methyl methacrylate), the presence of the above mentioned high molecular weight material in the product reduces the realisable throughput rate of the extruder. This reduction usually occurs to an extent which renders the process impractical.

Similarly, the extruder itself must be excessively and impractically long, conversions are low, and the overall process is excessively, and again impractically, slow. The method is unsuitable.

It would be desirable to be able to produce moderately high molecular weight polymers with a narrower molecular weight distribution by catalysed bulk extrusion polymerisation in an extruder.

We have now found that it is possible to do so in an industrially feasible process, using certain catalysts.

Accordingly, the present invention provides a process for the bulk addition polymerisation of an ethylenically unsaturated monomer or monomer mixture to give a homopolymer or copolymer, which process is carried out at least in part in an extruder and is catalysed by a catalyst comprising:

(a) at least one initiator of formula $(R^1)_3MZ$

wherein

each $R^1$ is independently $C_{1-10}$ alkyl, $C_{6-10}$ aryl or alkaryl;

Z is a substituent selected from

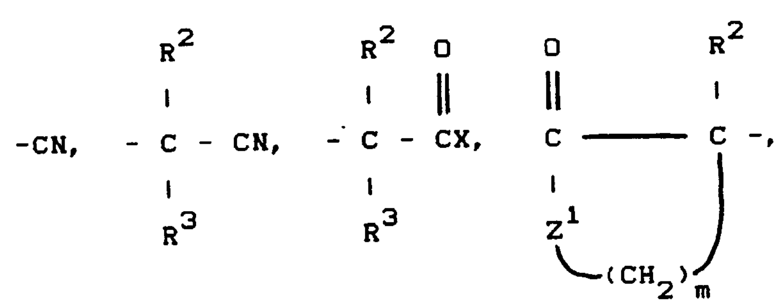

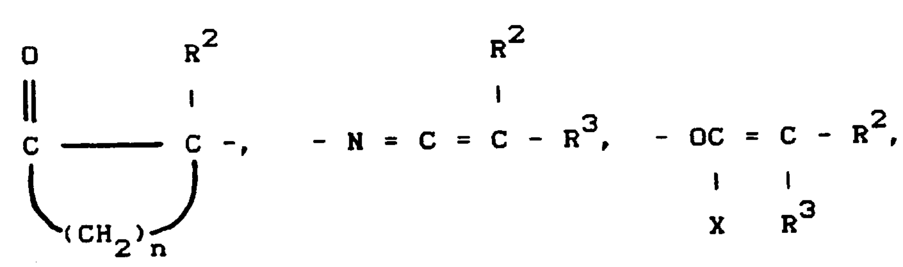

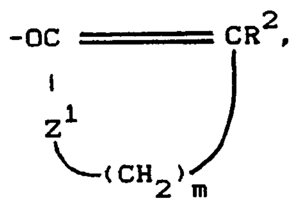 or 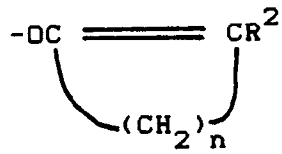

wherein

each of $R^2$ and $R^3$ is independently H, $C_{1-10}$ alkyl or alkenyl, $C_{6-10}$ aryl, alkaryl or aralkyl; any of said groups except H optionally containing one or more ether oxygen atoms within aliphatic segments thereof and optionally containing one or more functional substituents that are unreactive under polymerising conditions;

$Z^1$ is O or N;

m is 2, 3 or 4;

n is 3, 4 or 5; and

X is $-OSi(R^1)_3$, -R, -Or or $-NR^iR^{ii}$ where $R^1$ is as defined above;

R is $C_{1-20}$ alkyl, alkenyl or alkadienyl, or $C_{6-20}$ cycloalkyl, aryl, alkaryl or aralkyl, any of said groups optionally containing one or more ether oxygen atoms within aliphatic segments thereof and optionally containing one or more functional substituents that are unreactive under polymerising conditions; and

each of $R^i$ and $R^{ii}$ are independently $C_{1-4}$ alkyl;

M is Si, Sn or Ge, provided that when Z is

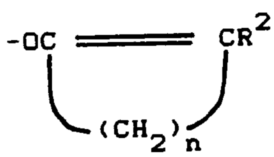 or 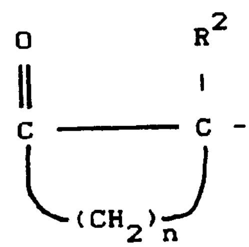

M is Sn or Ge; and

(b) a co-catalyst which is a source of anions or a Lewis acid.

If desired two or more initiators (a) and/or two or more co-catalysts (b) may be used in the process of the invention.

The initiator component (a) of the catalysts used in the process of the present invention may be used as such, or may be formulated into compositions with other materials, for example such conventional materials as catalyst supports.

In the process of the invention, it is desirable that the monomer(s) should be as free from impurity as possible. It is also preferable to minimise the water content of the monomer(s), the polymerisation initiator, the co-catalyst and any solvent (if used) and to conduct the process under anhydrous conditions so as to obtain relatively high molecular weight polymers by the present process.

The presence of significant amounts of water will tend to destroy the initiator, especially at elevated temperatures. Moreover, even concentrations significantly less than that of the initiator may prolong the induction period of the reaction undesirably. Accordingly, the monomer is often purified before use by distillation, followed by drying by passage through a drying column containing a desiccant, such as basic activated alumina Grade B and Zeolite 4A molecular sieves.

The initiator component (a) and the co-catalyst component (b) may both be soluble or dispersible in a monomer to be polymerised and/or in a solvent vehicle. Alternatively, the initiator (a) may be in insoluble form, e.g. the initiator may be comprised in an insoluble composition with an insoluble catalyst support such as an organic polymer or inorganic solid.

Under the polymerisation process conditions the co-catalyst (b) must be available to effect polymerisation in the polymerisation medium and this often means it must be soluble in at least one liquid monomer species, and/or in a phase which contains at least one monomer species, to such an extent that it can catalyse the reaction adequately. Thus, if the co-catalyst is not soluble in a monomer, an inert solvent compatible with the monomer(s) may be used, but just in sufficient quantities to dissolve the co-catalyst.

Examples of suitable inert solvents include ether solvents such as diethyl ether, dimethoxyethane, diethoxyethane, diethylene glycol dimethyl ether or tetrahydrofuran; and hydrocarbon solvents such as benzene, toluene or xylene. The hydrocarbon series of solvents are preferred amongst such solvents. In general, the solvents should not contain labile hydrogen or halogen atoms or activated alkenyl groups.

No particular restrictions are placed on the order in which the polymerisation initiator (a) or a composition comprising it, co-catalyst (b) and monomer are added to the reaction system in the process of the present invention and polymerisation can proceed whatever sequence is used. For example, the catalyst components may be mixed and added to the monomer.

However, in terms of being able to control the bulk extrusion polymerisation of the monomer(s) easily, it is desirable to add the initiator (a) and co-catalyst (b) separately to the reaction. Initiator (a) and co-catalyst (b) may be added neat or in the form of a solution or dispersion in a monomer to be polymerised. As stated hereinbefore an organic solvent such as tetrahydrofuran may be employed to dissolve the co-catalyst.

Thus, one catalyst component may be mixed with the monomer or monomer mixture and the resulting mixture added to the other catalyst component. For example, the monomer(s) and initiator may be mixed together and the resulting mixture charged to a pre-polymerisation unit or directly to the extruder along with a co-catalyst feed which may be a solution of the co-catalyst in a suitable solvent vehicle.

Alternatively, the initiator, as a solution or dispersion in a monomer to be polymerised, may be charged along with further monomer(s) to a pre-mixing device and the resulting monomer/initiator mix fed to a pre-polymerisation unit or to the extruder along with a solution of the co-catalyst in a monomer to be polymerised or a solvent vehicle.

In another embodiment, the initiator and co-catalyst may be added to separate portions of a monomer(s) to be polymerised and the resulting initiator and co-catalyst solutions/dispersions fed to a pre-polymerisation unit or to the extruder along with further monomer(s). Where dissolution of the co-catalyst is necessary, but is unsatisfactory in the monomer(s), an organic solvent which dissolves the co-catalyst may be used to form the co-catalyst solution feed.

In yet another embodiment, the monomer(s), initiator (a) and co-catalyst (b) are pre-mixed and the resulting polymerisable reagent mixture is then charged to a pre-polymerisation unit or directly to the extruder. The initiator (a) and co-catalyst (b) may be dissolved or dispersed in separate portions of a monomer(s) to be polymerised and the resulting initiator and co-catalyst solutions/dispersions fed to a mixing device along with further monomer(s) to form a polymerisable reagent mixture which is then charged as aforesaid. Where dissolution of the co-catalyst is necessary, but is unsatisfactory in the monomer(s), an organic solvent which dissolves the co-catalyst may be used to form the co-catalyst solution feed.

Where the initiator (a) is comprised in an insoluble composition with a catalyst support, the co-catalyst (b) may be added to the monomer or monomer mixture and the resulting monomer/co-catalyst mixture contacted with the initiator composition.

The initiator component (a) is generally used in such an amount that the molar ratio of initiator to monomer(s) is 1:10 or less, and preferably in the range 1:50 to 1:1000.

The co-catalyst is normally used in such an amount that the molar ratio of initiator (a) to co-catalyst (b) is in the range of 3:1 to 300:1, more often 8:1 to 100:1.

The initial part of the polymerisation may be relatively slow and it may be useful, in order to limit the effects of such slowness, to carry out the first stage of the polymerisation reaction in a pre-polymerisation unit with turbulent flow of the liquid reaction mass under essentially isothermal conditions. The turbulent flow serves to ensure good mixing of the reacting mass, which also ensures good heat transfer to the walls of the unit to favour isothermal conditions.

The pre-polymerisation unit is conveniently a tube with internal baffles arranged in two opposed inter-projecting series such that the flow of the reaction mass pumped down the tube is serpentine.

The monomer, preferably purified and dried as described hereinbefore, may be fed continuously or semi-continuously (batch-wise), preferably continuously, into the pre-polymerisation unit.

The rate at which it is necessary to add initiator to the reaction system to produce a product of a desired number average molecular weight may be determined by routine trial, and the initiator feeding means, e.g. a pump, may be set to supply initiator to the pre-polymerisation unit input at that rate.

Similarly, the rate at which it may be necessary to add co-catalyst to produce a satisfactory polymerisation conversion rate (i.e. rate of conversion of monomer(s) to polymer) in the pre-polymerisation unit may be determined by routine trial, and the co-catalyst feed means, e.g. a pump, may be set to supply co-catalyst to the pre-polymerisation unit input at that rate.

The output of the pre-polymerisation unit may typically comprise 15 to 35 % by weight polymer, more typically 20 to 30 % by weight, as a polymer in monomer syrup.

Where a pre-polymerisation unit is used, the pre-polymerisation product syrup is then passed continuously

or semi-continuously (batch-wise), preferably continuously, to a polymerisation extruder. Further co-catalyst may advantageously be introduced into the pre-polymerisation product syrup before it is fed to the extruder in order to optimise the overall polymerisation conversion rate. Again, the rate at which it may be necessary to add co-catalyst to optimise the polymerisation conversion rate in the extruder may be determined by routine trial and the co-catalyst feed means set to supply co-catalyst to the extruder input at that rate. The flow from the pre-polymerisation unit into the extruder is preferably adjusted so that the second rapid phase of the reaction starts as nearly as possible on entry into the extruder.

The pre-polymerisation unit is, of course, optional, and if it is omitted, monomer, initiator and co-catalyst may be fed directly to the extruder or to a pre-mixing device to form a polymerisable reagent mixture which is then fed to the extruder. The reagent feeds are preferably continuous but may be discontinuous.

The extruder will often be a twin-screw extruder in which the screws are positioned to clean the walls of the extruder barrel of reacting mass continually during operation.

The polymerisation reaction is strongly exothermic and will tend to increase the temperature of the reacting mass in the extruder.

Typically, 50 to 80% of the monomer in the extruder feedstock will be converted to polymer within 2 minutes.

It will be appreciated by the skilled man that in these conditions the reacting mass may increase rapidly in viscosity in the extruder, that the extruder must be capable of moving the mass under these conditions, and that the design of the extruder must be in order to achieve the latter.

The extruder screw speed may be adjusted by routine trial to give minimum hold-up.

The output of the extruder typically comprises 70 to 95 weight % polymer, more typically 75 to 90 weight % polymer.

The polymerisation process of this invention will generally be conducted at a range of temperatures as the reacting mass passes through the extruder. The temperature achieved in the extruder will depend on the heat transfer characteristics of the extruder, whether external cooling is applied to the extruder and the rate of polymer production. The latter is determined by the rate of introduction of feedstock material to the extruder. The process may be conducted, for example, at temperatures ranging from -40°C to 250°C, with temperatures in the range -20 to 180°C being preferred.

The present process may be conducted under 1 to 50 atmospheres pressure. Normally any pressure conventionally placed on the reaction mass by the extruder operating at normal ambient atmospheric pressure is suitable.

It is also desirable, but not essential, to conduct the process of the present invention in atmospheres that have been dried in order to prevent the penetration of any water. Such atmospheres include dry air, or atmospheres of dried inert gases such as nitrogen or argon; dried inert gas atmospheres are preferable.

The reaction product may be post-treated to remove unreacted monomer and other volatiles. For example, the output from the extruder may be fed into a second devolatilisation extruder where the temperature of the polymer is raised under the application of reduced pressure.

Reaction of the monomer(s) and post-treatment to at least partially remove unreacted monomer and other volatiles may be carried out in a single extruder by having an appropriate pressure and temperature profile along the extruder path. Where reaction and post-treatment are effected in a single extruder, the extruder will normally comprise a first zone in which the polymerisable mixture is reacted and a second zone which is operated at reduced pressure and optionally at elevated temperatures to provide for at least partial removal of the unreacted monomer and other volatiles contained in the product produced in the first zone. The temperature of the product produced in the first reaction zone may often be sufficient to allow for partial removal of unreacted monomer under the reduced pressure conditions operating in the second devolatilisation zone. By operation at reduced pressure we mean a pressure less than atmospheric pressure and preferably less than one tenth atmospheric pressure. Typically, the pressures operating in the second devolatilisation zone will be those associated with a vacuum. Of course, we do not exclude the possibility that a certain proportion of the monomer contained in the product passing into the second devolatilisation zone may polymerise.

The unreacted monomer (and other volatiles such as any low molecular weight oligomer) given off under the post-treatment conditions may be conventionally collected and recycled to the purification stage, the pre-polymerisation unit and/or the polymerisation extruder input. In excess of 99 % pure polymer may be obtained in this way.

Finally, the polymer product produced in the extruder may be melted (if it is not already in melt form by virtue of the heat generated in the polymerisation reaction) and conventionally fed through a die to produce a product lace which can be cooled in water and chopped for moulding compound, or the melt may be fed into a continuous slit die to make sheet. In order to produce an extrudable polymer melt (i.e. a polymer melt which possesses sufficient fluidity for feeding through a die), the extruder may comprise a heated end zone, e.g. as a third zone, which is heated to temperatures in excess of 150 °C and generally in excess of 200 °C. The heated

end zone may also be operated under vacuum, e.g. a high vacuum, to provide for removal of unreacted monomer and other volatiles.

Monomers which may be polymerised by the process of the invention include monomers of the formula:

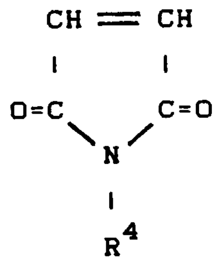 or $CH_2=C(Y)X^1$,

wherein

$X^1$ is -CN, -CH=CHC(0)$X^2$ or -C(0)$X^2$;

Y is -H, $-CH_3$, -CN or $-CO_2R^4$, provided, however,

when $X^1$ is -CH=CHC(0)$X^2$, Y is -H or $-CH_3$;

$X^2$ is $-OSi(R^5)_3$, $-R^4$, $-OR^4$ or $-NR^6R^7$;

each $R^5$ independently is H or a hydrocarbyl radical which is an aliphatic, alicyclic, aromatic or mixed aliphatic-aromatic radical containing up to 20 carbon atoms, provided that at least one $R^5$ group is not H;

$R^4$ is a hydrocarbyl radical which is an aliphatic, alicyclic, aromatic or mixed aliphatic aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerising conditions, and optionally containing one or more reactive substituents of the formula:

$$-Z^2(0)C-C(Y^1)=CH_2$$

wherein

$Y^1$ is -H or $-CH_3$ and $Z^2$ is 0 or $NR^6$; and

each of $R^6$ and $R^7$ is independently selected from $C_{1-4}$ alkyl.

For the monomer, substituents having oxygen nitrogen or silicon containing groups which are devoid of reactive hydrogen atoms under polymerising conditions may be used. Groups such as $OSi(R^5)_3$ and $CONH_2$ are non-reactive under such conditions and therefore can be tolerated.

On the other hand, groups such as $CO_2H$ and OH are reactive under polymerising conditions. In order for monomers containing such groups to be useful in the invention process, the groups must be chemically protected, i.e. deactivated. Monomers containing such deactivated groups are useful in the preparation of polymers which upon treatment to remove the protective group, have functional sites along the polymer chain.

Monomers which contain sufficiently sterically hindered amine and alcohol groups that remain inert under reactive conditions may be used directly without deactivation.

Typical examples of monomers which may be polymerised in the process of the present invention include:

methacrylic acid esters such as methyl methacrylate, ethyl methacrylate, propyl methacrylate, butyl methacrylate, 2-ethylhexyl methacrylate, lauryl methacrylate and p-tolyl methacrylate;

substituted methacrylic acid esters such as 2-(dimethylamino)ethyl methacrylate, 2-acetoxyethyl methacrylate; 3-methoxypropyl methacrylate and 2-(trimethylsiloxy)ethyl methacrylate;

polyunsaturated methacrylic acid esters such as 2-[(1-propenyl)oxy]ethyl methacrylate, allyl methacrylate,2-methacryloxyethyl methacrylate and triethylene glycol dimethacrylate;

acrylic acid esters such as methyl acrylate, ethyl acrylate, isopropyl acrylate, n-butyl acrylate, sec-butyl acrylate, tert-butyl acrylate, phenyl acrylate and cyclohexyl acrylate;

substituted acrylic acid esters such as 2-(dimethylamino)ethyl acrylate, 2,2,3,3,4,4,4-heptafluorobutyl acrylate, ethyl 2-cyanoacrylate, 4-fluorophenyl acrylate, and ethyl 2-chloroacrylate;

polyunsaturated acrylic acid esters such as 2-methacryloxyethyl acrylate, 2-[(1-propenyl)-oxy)ethyl acrylate and allyl acrylate;

unsaturated nitriles such as methacrylonitrile, methylene malononitrile and acrylonitrile;

N,N-dialkyl unsaturated amides such as N,N-dimethylacrylamide; and

vinyl compounds, e.g. aromatic vinyl compounds, such as propyl vinyl ketone, styrene, o-, m- or p-methylstyrene, o-, m- or p-methoxystyrene α-methylstyrene, o-, m- or p-dimethylaminostyrene or m-or p-chlorostyrene.

Preferred amongst these monomers are the acrylic type monomers such as methyl methacrylate, lauryl methacrylate, butyl methacrylate, 2-ethylhexyl methacrylate, 2-(trimethylsiloxy)ethyl methacrylate, 2-methacryloxyethyl acrylate, 2-acetoxyethyl methacrylate, 2-(dimethylamino)ethyl methacrylate, allyl methacrylate, butyl acrylate, methyl acrylate, butyl acrylate, allyl acrylate, acrylonitrile and methacrylonitrile. Methyl methacrylate is an especially preferred monomer.

These monomers may be used singly or in combination.

The product polymer of the process of the present invention preferably has a number average molecular weight in the range of 25,000 to 400,000, e.g. 50,000 to 200,000.

In respect of the (initiator) component (a) of the catalyst, tetracoordinate organosilicon, organotin or organogermanium initiators which may be used in the process of the invention include any of those disclosed in United States Patents 4414372 and 4417034, the disclosures of which are incorporated herein by reference. The initiators are either known compounds or are preparable by known methods from known materials. For example many of the substituent groups on the central Si, Sn or Ge nucleus may be introduced to form the initiator by conventional nucleophilic displacement at that nucleus. The preparation of the initiators is more particularly described in US-4414372 and US-4417034.

Examples of initiators which may be useful in the invention process include
[(1-methoxy-2-methyl-1-propenyl)oxy]trimethylsilane;
2-(trimethylsilyl)isobutyronitrile; ethyl 2-(trimethylsilyl)acetate; trimethylsilyl nitrile; methyl [4,5-dihydro-2-furanyl)oxy]trimethylsilane;
[(2-methyl-1-propenylidene)bis(oxy)]bis[trimethylsilane]; [(2-methyl-1-[2-(methoxymethoxy)ethoxy]-1-propenyl)oxy]trimethylsilane; methyl [2-methyl-1-(trimethylsilyloxy)prop-1-enyloxy]acetate;
[(1-(methoxymethoxy)-2-methyl-1-propenyl)oxy]trimethyl-silane; (2-ethyl-1-propoxybut-1-enyloxy)-ethyldimethylsilane; [(1-((1-dec-2-enyl)oxy)-2-methyl-prop-1-enyloxy]trimethylsilane; 2-(trimethylsilyl)-propanenitrile; methyl 2-(triethylsilyl)acetate; [1-methoxy-2-methylprop-1-enyloxy]phenyldimethylsilane; trimethyl a,a′,a″-tris(trimethylsilyl)-1,3,5-benzene triacetate; dimethyl a,a′-bis(trimethylsilyl)-1,3-benzene diacetate; [1,6-dimethoxy-1,5-hexadiene-1,6-diylbis(oxy)]bis-[trimethylsilane]; [(2-methyl-1-butenylidene)bis(oxy)]bis[trimethylsilane]; [(2-methyl-1-[2-(trimethylsiloxy)ethoxy]-1-propenyl)-oxy]trimethylsilane;
dimethyl 2,5-bis(trimethylgermanyl)hexanedioate; methyl 2-methyl-2-(trimethylgermanyl)propanoate; and ethyl (trimethylgermanyl)acetate;
methyl 2-methyl-2-(tributylstannyl)propanoate;
[(2-methyl-1-cyclohexenyl)oxy]tributylstannane; ethyl 2-(trimethylstannyl)propanoate; [1-cyclohexenyloxy]-trimethylstannane; phenyl 2-methyl-2-(tributyl-stannyl)propanoate; and [(2-methyl-1-cyclohexenyl)-oxy] tributylstannane.

In the initiator of formula $(R^1)_3MZ$, M is preferably Si, each $R^1$ is independently alkyl, especially methyl, and Z is a substituent having the formula:

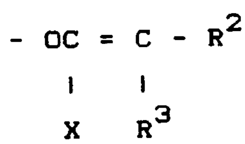

wherein $R^2$ and $R^3$ are independently $C_{1-10}$ alkyl and X is -OR where R is $C_{1-20}$ alkyl.

A particularly preferred initiator is [(1-methoxy-2-methyl-1-propenyl)oxy]trimethylsilane.

All the initiator components may be used as such, or they may be formulated into compositions with other materials.

Insoluble initiator compositions may be used where the initiator component is soluble or dispersible and it is desired to avoid such solution or dispersion. The initiator may then be formulated into an insoluble or non-dispersible composition, e.g. with such conventional materials as a catalyst support. The initiator component in such a composition is often one adhered to or embedded in the surface of a support (rather than chemically bonded to it).

The support may comprise, for example, a highly cross-linked polymer, in particular of vinylic monomers, such as an acrylic or styrene homo- or co-polymer, preferably a particulate one, insoluble in any desired polymerisation system, or a similarly insoluble (particulate) inorganic solid.

The co-catalysts used in the process of the invention are either known compounds or can be prepared by known methods from known compounds.

Any co-catalyst component (b) which in use of the catalyst is available in the polymerisation is suitable for

use with the present initiators.

Where the co-catalyst is a Lewis acid, it is generally rendered available in the polymerisation process by being soluble in a polymerising monomer and/or any solvent vehicle.

Where the co-catalyst is a source of anions, it is generally rendered available in the polymerisation process by containing a cation which renders it soluble in a polymerising monomer and/or any solvent vehicle. Where the co-catalyst is a source of anions it is preferably a source of azide, cyanide, fluoride or bifluoride ions, especially fluoride ions. Favoured cations which render the co-catalyst available in the polymerisation medium, are often substituted -onium ions. These include quaternary ammonium, phosphonium, and tris(dialkylamino)sulphonium ions, often substituted by relatively bulky organic-soluble groups, e.g. $C_{3-6}$ alkyl, such as butyl. Alkali and alkali earth metal cations are less preferred but may be used.

Suitable co-catalysts include zinc iodide, bromide, and chloride, mono- and dialkylaluminium halides, dialkylaluminium oxides, tris(dimethylamino) sulphonium difluorotrimethylsilicate, tris(dimethylamino)sulphonium cyanide, tetraphenylarsonium cyanide, tris(dimethylamino) sulphonium azide, tetraethylammonium azide, bis(dialkylaluminium) oxides, boron trifluoride etherate, alkali metal fluorides, cyanides and azides, tris(dimethylamino)sulphonium difluorotriphenylstannate, tetrabutylammonium fluoride, tetramethyl ammonium fluoride and tetraethylammonium cyanide, ammonium bifluoride, tetraalkylammonium bifluorides, tris(dimethylamino)sulphonium bifluoride and tetraarylphosphonium bifluorides. The preferred co-catalysts are the tetraalkylammonium fluorides.

The co-catalyst may be used as a complex with a suitable complexing agent such as an active hydrogen compound, e.g. acetylacetone and hexamethylacetylacetone. The use of a complexed co-catalyst is more particularly described in the present applicants European patent application EP-0329330 the disclosure in which is incorporated herein by way of reference.

The present invention is now illustrated, but not limited, by the following Example.

## Example

In the following Example:

The initiator used was [(1-methoxy-2-methyl-1-propenyl)oxy]trimethylsilane which had been purified by fractional distillation. The initiator was dissolved in dry methyl methacrylate immediately prior to use to give a solution containing 0.21 moles of initiator per litre of methyl methacrylate.

The co-catalyst used was a tetrabutylammonium fluoride/hexamethylacetylacetone co-catalyst complex which was prepared by mixing the tetrabutylammonium fluoride and hexamethylacetylacetone in equimolar proportions. The co-catalyst complex was collected as a white solid and this product was dried under vacuum and then stored in a desiccator. The co-catalyst was dissolved in dry toluene immediately prior to use to give a solution containing 0.011 moles of the co-catalyst complex per litre of toluene.

The extruder employed was a twin screw extruder. The extruder screws were rotated at 110 rpm (45 % torque) and the initial operating temperature of the extruder was 65 °C.

## Example 1

This example illustrates the production of poly(methyl methacrylate) by the bulk extrusion polymerisation of methyl methacrylate.

Dry methyl methacrylate at 160 mls/minute and initiator solution at 16.0 mls/minute were fed continuously to a mixing device. The resulting monomer/initiator mixture together with the co-catalyst solution at 8.0 mls/minute were then fed continuously to the extruder. The polymerisation reaction in the extruder was strongly exothermic and the final temperature of the extrudate collected from the extruder was 150 °C. The polymer product was produced at a rate of 60 g/minute and this product was analysed and found to have a number average molecular weight of 38,000 and a molecular weight distribution of 2.8.

## Claims

1. A process for the bulk addition polymerisation of an ethylenically unsaturated monomer or monomer mixture to give a homopolymer or copolymer, which process is carried out at least in part in an extruder and is catalysed by a catalyst comprising:
   (a) at least one initiator of formula:

$(R^1)_3MZ$

wherein

each $R^1$ is independently $C_{1-10}$ alkyl, $C_{6-10}$ aryl or alkaryl;

Z is a substituent selected from

-CN, 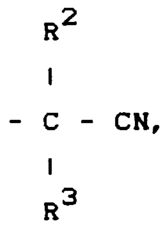 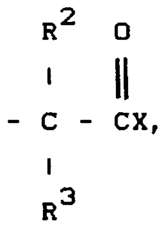 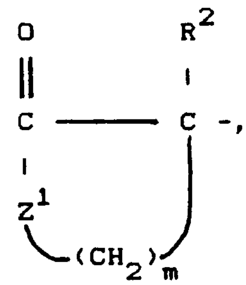

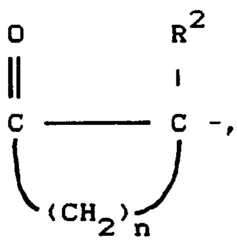 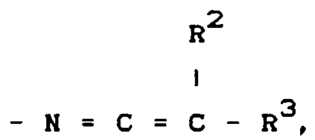 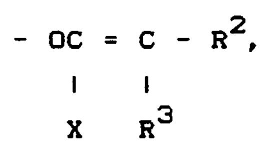

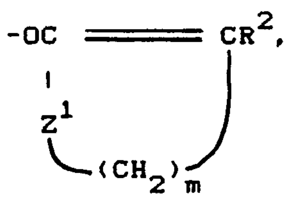 or 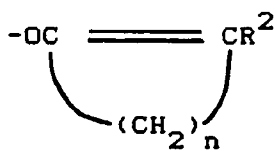

wherein

each of $R^2$ and $R^3$ is independently H, $C_{1-10}$ alkyl or alkenyl, $C_{6-10}$ aryl, alkaryl or aralkyl; any of said groups except H optionally containing one or more ether oxygen atoms within aliphatic segments thereof and optionally containing one or more functional substituents that are unreactive under polymerising conditions;

$Z^1$ is O or N;

m is 2, 3 or 4;

n is 3, 4 or 5; and

X is $-OSi(R^1)_3$, -R, -OR or $-NR^iR^{ii}$ where

$R^1$ is as defined above;

R is $C_{1-20}$ alkyl, alkenyl or alkadienyl, or $C_{6-20}$ cycloalkyl, aryl, alkaryl or aralkyl, any of said groups optionally containing one or more ether oxygen atoms within aliphatic segments thereof and optionally containing one or more functional substituents that are unreactive under polymerising conditions; and

each of $R^i$ and $R^{ii}$ are independently $C_{1-4}$ alkyl;

M is Si, Sn or Ge, provided that when Z is

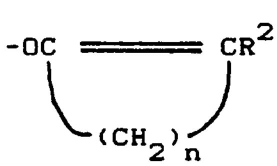 or 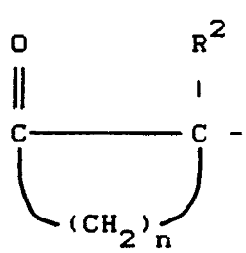

M is Sn or Ge; and
(b) a co-catalyst which is a source of anions or a Lewis acid.

**2.** A process as claimed in claim 1 wherein the initiator (a) and co-catalyst (b) are added separately to the reaction.

**3.** A process as claimed in claim 1 or claim 2 wherein the initiator component (a) is of formula:

$$(R^1)_3MZ$$

wherein
M is Si;
each $R^1$ is independently alkyl; and
Z is a substituent

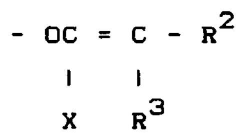

wherein
$R^2$ and $R^3$ are independently $C_{1-10}$ alkyl; and
X is -OR where R is $C_{1-20}$ alkyl.

**4.** A process as claimed in claim 3 wherein the initiator is [(1-methoxy-2-methyl-1-propenyl)oxy] trimethylsilane.

**5.** A process as claimed in any one of the preceding claims wherein the co-catalyst is a source of fluoride ions.

**6.** A process as claimed in claim 5 wherein the co-catalyst is a tetraalkylammonium fluoride.